# FASCICULE DE BREVET EUROPEEN

(11) **EP 2 533 985 B1**
(45) Date de publication et mention de la délivrance du brevet: **15.10.2014**
(21) Numéro de dépôt: 11702213.7
(22) Date de dépôt: 04.02.2011
(51) Int. Cl.: B60C 11/12

(54) **PNEUMATIQUE POUR VEHICULES A DEUX ROUES COMPORTANT UNE BANDE DE ROULEMENT PRESENTANT DES INCISIONS**
REIFEN FÜR ZWEIRÄDRIGE FAHRZEUGE MIT EINEM PROFIL MIT LAMELLEN
TIRE FOR TWO-WHEELED VEHICLES, COMPRISING A TREAD HAVING SIPES

(30) Priorité: 12.02.2010 FR 1050990
(43) Date de publication de la demande: 19.12.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BESTGEN, Luc, F-63140 Chatel-Guyon (FR)
(74) Mandataire: Le Cam, Stéphane Georges Elie
(86) Numéro de dépôt international: PCT/EP2011/051634
(87) Numéro de publication internationale: WO 2011/098403

(56) Documents cités:
- EP-A1- 1 987 964
- WO-A1-2004/018236
- WO-A1-2008/149611
- CH-A5- 561 615
- DE-A1- 4 107 547
- JP-A- 5 058 116

## Description

L'invention concerne un pneumatique destiné à équiper un véhicule et plus particulièrement destiné à équiper un véhicule à deux roues tel qu'une motocyclette et plus spécifiquement encore un pneumatique destiné à équiper une motocyclette d'indice de vitesse supérieur à W qui correspond à une vitesse 270 km/h.

Bien que non limité à une telle application, l'invention sera plus particulièrement décrite en référence à un tel pneumatique de motocyclette, ou moto, et plus spécifiquement encore en référence à un pneumatique destiné à équiper la roue arrière.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée d'éléments de renforcement. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet de travail d'éléments de renforcement sensiblement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet de travail peuvent être associées à au moins une couche d'éléments circonférentiels, généralement obtenus par enroulement hélicoïdal d'une bandelette d'au moins un élément de renforcement enrobé de caoutchouc.

Le choix des architectures de sommet des pneumatiques intervient directement sur certaines propriétés des pneumatiques telles que l'usure, l'endurance, l'adhérence ou bien encore le confort en roulage ou dans les cas notamment des motocyclettes la stabilité. Toutefois d'autres paramètres des pneumatiques tels que la nature des mélanges caoutchouteux constituant la bande de roulement interviennent également sur les propriétés dudit pneumatique (voir par exemple le document WO-A-2008149611). Le choix et la nature des mélanges caoutchouteux constituant la bande de roulement sont par exemple des paramètres essentiels concernant les propriétés d'usure. Le choix et la nature des mélanges caoutchouteux constituant la bande de roulement interviennent également sur les propriétés d'adhérence du pneumatique.

Il est encore connu pour d'autres types de pneumatiques de réaliser des bandes de roulement comportant des incisions plus particulièrement pour des pneumatiques destinés à rouler sur des sols enneigés, verglacés, ou mouillés.

De telles bandes de roulement sont habituellement pourvue d'éléments en reliefs de type nervures ou blocs, séparés les uns des autres dans le sens circonférentiel et/ou dans le sens transversal par des rainures transversales et/ou circonférentielles. Ces bandes de roulement comportent alors en outre des incisions ou fentes, dont les largeurs non nulles sont très inférieures à celles des rainures précédemment citées. En réalisant une pluralité de découpes débouchant sur la surface de roulement, on crée une pluralité d'arêtes de gomme pour couper la couche d'eau éventuellement présente sur la route, de manière à maintenir le pneumatique en contact avec le sol et à créer des cavités formant éventuellement des conduits destinés à recueillir et à évacuer l'eau présente dans la zone de contact du pneumatique avec la route dès lors qu'elles sont disposées de façon à déboucher en dehors de la zone de contact.

De nombreux types d'incisions ont déjà été proposés en vue d'améliorer l'adhérence du pneumatique sur les sols considérés.

Le document FR 2 418 719 décrit par exemple des incisions qui peuvent être normales à la surface de la bande de roulement ou inclinées par rapport à la direction perpendiculaire à ladite surface.

Le document FR 791 250 décrit des incisions présentant un tracé ondulé sur la surface de la bande de roulement.

D'autres incisions sont divulguées dans les documents EP-A-1987964, DE-A-4107547 et JP-A-05058116.

Les performances des motocyclettes notamment en adhérence sur route mouillée ont conduit à proposer des pneumatiques avec des bandes de roulement comportant des incisions en vue de contribuer à améliorer les passages de couples moteur ou freineur et ainsi améliorer les capacités d'accélération ou de freinage des motocyclettes.

Les essais réalisés avec des pneumatiques comportant des incisions découpées dans la bande de roulement telles que dans un plan circonférentiel les parois des incisions sont orientées radialement ont mis en évidence notamment sur la partie centrale des pneumatiques que ceux-ci présentent des profils d'usure irréguliers. De tels profils d'usure s'amplifient avec l'usure et conduisent à une vitesse d'usure plus importante du pneumatique.

Les inventeurs se sont ainsi donnés pour mission de fournir un pneumatique pour motocyclette dont les propriétés d'adhérence notamment sur sol mouillé sont semblables à celles des pneumatiques précédemment cités qui comportent des incisions avec une moindre dégradation des propriétés en termes d'usure comparées à celles des pneumatiques sans incision et plus particulièrement sans augmenter sa vitesse d'usure.

L'invention a ainsi pour but de fournir un pneumatique pour motocyclette dont les propriétés en terme d'adhérence sont améliorées notamment sur sol mouillé en conservant une vitesse d'usure satisfaisante.

Ce but a été atteint selon l'invention par un pneumatique pour véhicule motorisé à deux roues, selon la revendication 1, comportant une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, au moins la surface de la bande de roulement étant constituée d'un premier mélange polymérique s'étendant sur au moins une partie de la partie centrale et d'au moins un deuxième mélange polymérique présentant des propriétés physico-chimique différentes de celles dudit premier mélange polymérique et couvrant au moins une partie des parties axialement extérieures de la bande de roulement, au moins la partie centrale de la bande de roulement comportant au moins une incision, dans la partie centrale de la bande de roulement constituée dudit premier mélange polymérique, dans un plan circonférentiel, au moins une partie d'une paroi de ladite au moins une incision étant formée d'au moins deux lignes, chacune des lignes formant un angle avec la direction radiale compris ente 5 et 65° et les directions desdites deux lignes successives formant entre elles un angle compris entre 30 et 120°.

Selon l'invention, le pneumatique comporte donc dans sa partie centrale des incisions qui en coupe dans un plan circonférentiel présente au moins une forme en V, ou en chevron couché dont l'une des extrémités affleure la surface de la bande de roulement, les branches du V étant constituées de deux lignes successives desdites au moins deux lignes.

Au sens de l'invention, une incision est une découpe formant deux parois et dont la distance entre les parois mesurée selon la normale à un plan tangent à l'une des parois est inférieure à 1.5 mm et de préférence inférieure à 1 mm. Ladite distance au niveau de la surface de la bande de roulement est au moins égale à ladite distance au niveau du fond de l'incision, c'est-à-dire le niveau le plus éloigné de la surface de la bande de roulement. Dans le cas notamment d'un pneumatique pour motocyclette, l'épaisseur de la bande de roulement étant relativement peu importante, un élargissement de ladite distance depuis la surface de la bande de roulement vers le fond de l'incision ne peut exister au risque de provoquer un affaissement des bords de l'incision au niveau de la surface de la bande de roulement et ainsi conduire à une diminution de la surface de l'aire de contact avec le sol.

La direction longitudinale du pneumatique, ou direction circonférentielle, est la direction correspondant à la périphérie du pneumatique et définie par la direction de roulement du pneumatique.

La direction transversale ou axiale du pneumatique est parallèle à l'axe de rotation du pneumatique.

L'axe de rotation du pneumatique est l'axe autour duquel il tourne en utilisation normale.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

Un plan radial ou méridien contient l'axe de rotation du pneumatique.

La direction radiale est une direction coupant l'axe de rotation du pneumatique et perpendiculaire à celui-ci. La direction radiale est l'intersection entre un plan circonférentiel et un plan radial.

Un pneumatique ainsi réalisé selon l'invention et monté sur la roue arrière d'une motocyclette procure effectivement des performances d'adhérence notamment sur sol humide ou mouillé améliorées par rapport à des pneumatiques ne comportant pas d'incision. Par ailleurs, lors des roulages, les usures irrégulières sont fortement atténuées en comparaison de celles apparaissant pour des roulages dans les mêmes conditions avec des pneumatiques comportant des incisions découpées dans la bande de roulement telles que dans un plan circonférentiel les parois des incisions sont orientées radialement. Lorsque l'usure de la bande de roulement du pneumatique augmente, il apparaît que les irrégularités s'atténuent encore.

Les inventeurs constatent que, dans un plan circonférentiel, la forme en V des incisions, qui se composent d'au moins deux parties que sont les deux lignes, constitue au fil de l'usure du pneumatique deux parties successives, chacune étant inclinée par rapport à la direction radiale dans un plan circonférentiel de coupe. Les inventeurs pensent avoir mis en évidence que l'inclinaison de chacune des parties de l'incision dans un plan circonférentiel par rapport à la direction radiale conduit à une usure irrégulière moins prononcée que celle d'une incision découpée dans la bande de roulement de sorte que dans un plan circonférentiel ses parois sont orientées radialement. Les inventeurs constatent en outre que les orientations successives opposées des deux parties de l'incision conduisent à des irrégularités qui se compensent pour aboutir à un profil d'usure avec des irrégularités peu prononcées lorsque l'usure du pneumatique correspond à une deuxième partie de l'incision.

Selon un mode de réalisation avantageux de l'invention, lesdites deux lignes successives sont reliées par un arc de cercle. En d'autres termes la forme en V constituée de deux lignes successives ne présente pas de pointe mais une liaison arrondie entre les deux lignes ou branches du V. Une telle forme facilite la conception de la partie du moule qui va pénétrer la bande de roulement pour former l'incision.

Selon l'invention, une paroi de ladite au moins une incision étant formée de deux lignes, l'intersection des directions desdites deux lignes est orientée dans le sens de roulage du pneumatique par rapport aux extrémités desdites deux lignes. En d'autres termes, la pointe du V, ou plus exactement l'arc de cercle qui relie lesdites deux lignes selon le mode de réalisation avantageux précédemment décrit, est orienté par rapport auxdites deux lignes dans le sens de roulage du pneumatique.

Les inventeurs ont encore su mettre en évidence qu'une telle réalisation de l'incision permet de contribuer à diminuer la vitesse d'usure du pneumatique. En effet, les essais réalisés ont montré que des incisions identiques orientés en sens opposé, c'est-à-dire avec la pointe du V, ou plus exactement l'arc de cercle qui relie lesdites deux lignes selon le mode de réalisation avantageux précédemment décrit, orienté par rapport auxdites deux lignes dans le sens opposé au sens de roulage du pneumatique, conduisent à une vitesse d'usure plus importante.

La présence de ces incisions uniquement dans la partie centrale du pneumatique permet de diminuer la vitesse d'usure dans la zone du pneumatique où les passages de couples sont les plus importants tant en accélération qu'au freinage sans trop pénaliser les coûts de fabrication des incisions en V étant naturellement plus onéreuses à fabriquer. Le pneumatique peut par contre comporter d'autres types d'incisions sur les parties axialement extérieures pour améliorer les performances d'adhérence lors de passages de courbes.

L'association des incisions en V avec une bande de roulement constituée de plusieurs mélanges polymériques répartis entre la partie centrale les parties axialement extérieures autorise la réalisation d'une bande de roulement présentant par exemple des propriétés relatives à l'usure améliorées au centre de la bande de roulement et des propriétés relatives à l'adhérence améliorées sur les parties axialement extérieures.

Il est ainsi possible de faire coïncider la partie centrale de la bande roulement présentant des propriétés relatives à l'usure améliorées avec les incisions en V. Une telle réalisation contribue encore à limiter la vitesse d'usure dans la partie centrale du pneumatique.

Selon un mode de réalisation préféré de l'invention, le deuxième mélange polymérique présente une dureté Shore A différente de celle du premier mélange polymérique.

Avantageusement selon l'invention, les duretés shore A dudit premier mélange polymérique constitutif d'au moins une partie de la partie centrale et dudit au moins deuxième mélange polymérique constitutif d'au moins une partie des parties axialement extérieures sont différentes d'au moins une unité et de préférence deux.

Avantageusement encore, la dureté shore A dudit premier mélange polymérique constitutif d'au moins une partie de la partie centrale est supérieure à celle dudit au moins deuxième mélange polymérique constitutif d'au moins une partie des parties axialement extérieures.

La dureté Shore A des mélanges polymériques après cuisson est appréciée conformément à la norme ASTM D 2240-86.

Selon un premier mode de réalisation de l'invention, une paroi de ladite au moins une incision étant formée de deux lignes, dans un plan circonférentiel, l'intersection des directions desdites deux lignes est située à une distance radiale de la surface de la bande de roulement comprise entre 25 et 50% de la profondeur de l'incision.

La profondeur de l'incision est, dans un plan circonférentiel de coupe, la distance radiale qui sépare la surface de la bande de roulement du point de l'incision le plus éloigné de la surface de la bande de roulement. En d'autres termes, la profondeur est égale à la distance radiale mesurée entre la surface de la bande de roulement et l'extrémité de la ligne qui n'affleure pas la surface de la bande de roulement et qui n'est pas au contact de la pointe du V.

Selon un deuxième mode de réalisation de l'invention, une paroi de ladite au moins une incision étant formée de deux lignes, dans un plan circonférentiel, l'intersection des directions desdites deux lignes est située à une distance radiale de la surface de la bande de roulement comprise entre 50 et 75% de la hauteur de l'incision.

Ce deuxième mode de réalisation présente l'avantage d'optimiser encore la vitesse d'usure de la bande de roulement. En effet, les inventeurs ont encore su mettre en évidence que c'est la partie de l'incision qui, dans un plan de coupe circonférentiel, présente un angle avec la direction radiale orienté dans le sens de rotation du pneumatique, qui a un effet sur la vitesse d'usure du pneumatique le plus important et que cet effet est d'autant plus important que la profondeur des sculptures est importante.

Selon une variante de l'invention, deux lignes successives sont symétriques l'une de l'autre par rapport à la bissectrice de l'angle formée par leurs directions. Cette variante permet d'optimiser les propriétés en termes d'usure et notamment en ce qui concerne la vitesse d'usure ; d'une part, la présence d'irrégularités est optimisée du fait de l'inclinaison de chacune des branches du V et de l'atténuation de ces irrégularités dès lors que l'usure de la bande de roulement dépasse la pointe du V, et d'autre part, la présence de la première branche du V dans le sens de roulage alors que l'épaisseur de la bande de roulement est la plus importante contribue efficacement à la diminution de la vitesse d'usure.

Une variante avantageuse de l'invention prévoit que la profondeur des incisions varie selon la direction axiale notamment pour tenir compte des vitesses d'usure différentes selon la direction axiale du pneumatique et pour obtenir des rigidités de la bande de roulement variables selon la direction axiale.

Selon un mode de réalisation avantageux de l'invention, afin de conférer des propriétés symétriques au pneumatique, la bande circonférentielle centrale est avantageusement centrée sur le plan équatorial. Selon d'autres modes de réalisations, destinés par exemple à des pneumatiques devant rouler sur un circuit comportant des virages essentiellement dans la même direction, la bande circonférentielle centrale peut ne pas être centrée sur le plan équatorial.

Des variantes avantageuses de l'invention peuvent prévoir la présence de cinq bandes circonférentielles ou plus pour former au moins la surface de la bande de roulement et ainsi conférer une évolution graduelle des propriétés de ladite bande de roulement depuis le plan équatorial vers les épaules. De même que précédemment, une telle réalisation peut être symétrique par rapport au plan équatorial ou non, la répartition des bandes différent soit par leur composition soit par leur répartition par rapport au plan équatorial.

Selon un mode de réalisation préféré de l'invention, le deuxième mélange polymérique est d'une composition différente de celle du premier mélange polymérique et de préférence encore, le deuxième mélange polymérique présente des propriétés d'adhérence supérieures à celles dudit premier mélange polymérique.

Selon d'autres modes de réalisations, des propriétés différentes peuvent être obtenues avec des mélanges identiques par des conditions de vulcanisation différentes.

Avantageusement encore, les épaisseurs radiales des premier et deuxième mélanges polymériques peuvent être différentes, de façon à optimiser axialement l'usure de la bande de roulement. Avantageusement encore les épaisseurs varient graduellement.

Selon un mode de réalisation préféré de l'invention, les éléments de renforcement de la structure de renfort de type carcasse font avec la direction circonférentielle un angle compris entre 65° et 90°.

Une réalisation préférée de l'invention prévoit que le pneumatique est notamment constitué d'une structure de renforcement de sommet qui comporte au moins une couche d'éléments de renforcement circonférentiels ; selon l'invention, la couche d'éléments de renforcement circonférentiels est constituée d'au moins un élément de renforcement orienté selon un angle formé avec la direction longitudinale inférieur à 5°.

La présence d'une couche d'éléments de renforcement circonférentiels est notamment préférable pour la réalisation d'un pneumatique destiné à être utilisé à l'arrière d'une motocyclette.

De préférence également, les éléments de renforcement de la couche d'éléments de renforcement circonférentiels sont métalliques et/ou textiles et/ou en verre. L'invention prévoit notamment l'utilisation d'éléments de renforcement de natures différentes dans une même couche d'éléments de renforcement circonférentiels.

De préférence encore, les éléments de renforcement de la couche d'éléments de renforcement circonférentiels présentent un module d'élasticité supérieur à 6000 N/mm².

Une variante de réalisation de l'invention prévoit avantageusement que les éléments de renforcement circonférentiels sont répartis selon la direction transversale avec un pas variable.

La variation du pas entre les éléments de renforcement circonférentiels se traduit par une variation du nombre d'éléments de renforcement circonférentiels par unité de longueur selon la direction transversale et en conséquence par une variation de la densité d'éléments de renforcement circonférentiels selon la direction transversale et donc par une variation de la rigidité circonférentielle selon la direction transversale.

Selon une variante de l'invention, la structure de renforcement de sommet comporte au moins une couches d'éléments de renforcement formant des angles avec la direction circonférentielle compris entre 10 et 80°.

Selon cette variante, la structure de renforcement de sommet comporte avantageusement au moins deux couches d'éléments de renforcement, les éléments de renforcement formant entre eux des angles compris entre 20 et 160°, d'une couche à la suivante, et de préférence supérieurs à 40°.

Selon une réalisation préférée de l'invention, les éléments de renforcement des couches de travail sont en matériau textile.

Selon un autre mode de réalisation de l'invention, les éléments de renforcement des couches de travail sont en métal.

Dans une réalisation avantageuse de l'invention, notamment pour optimiser les rigidités de la structure de renforcement le long du méridien du pneumatique, et en particulier aux bords des couches de travail, les angles formés par les éléments de renforcement des couches de travail avec la direction longitudinale sont variables selon la direction transversale tels que lesdits angles sont supérieurs sur les bords axialement extérieurs des couches d'éléments de renforcement par rapport aux angles mesurés au niveau du plan équatorial du pneumatique.

D'autres détails et caractéristiques avantageux de l'invention ressortiront ci-après de la description des exemples de réalisation de l'invention en référence aux figures 1 à 5 qui représentent :
- figure 1, une vue partielle en perspective d'un schéma d'un pneumatique selon l'invention,
- figure 2, une vue partielle en coupe dans le plan équatorial d'un schéma du profil d'usure d'un pneumatique comportant des incisions,
- figure 3, une vue partielle en coupe dans le plan équatorial d'un schéma du pneumatique de la figure 1,
- figure 4, une vue partielle en coupe dans le plan équatorial d'un schéma du profil d'usure du pneumatique de la figure 3,
- figure 5, une vue partielle en coupe dans le plan équatorial d'un schéma du profil d'usure du pneumatique de la figure 3 dans un état plus avancé.

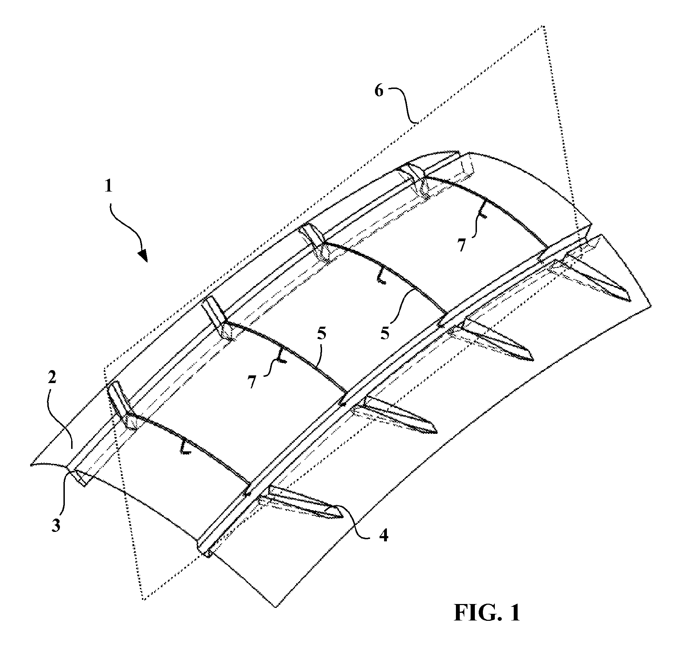

Les figures 1 à 5 ne sont pas représentées à l'échelle pour en simplifier la compréhension.

La figure 1 représente une vue partielle en perspective d'un pneumatique 1, et plus précisément de la surface extérieure 2 de sa bande de roulement, destiné à équiper la roue arrière d'une motocyclette. Le pneumatique 1 présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique.

De manière non représentée sur les figures, le pneumatique 1 comprend une armature de carcasse constituée d'une couche comprenant des éléments de renforcement de type textile. La couche est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

L'armature de carcasse est ancrée de chaque côté du pneumatique 1 dans un bourrelet dont la base est destinée à être montée sur un siège de jante. Chaque bourrelet est prolongé radialement vers l'extérieur par un flanc, ledit flanc rejoignant radialement vers l'extérieur la bande de roulement.

Le pneumatique 1 comporte encore une armature de sommet comporte encore une armature de sommet constituée d'une couche d'éléments de renforcement circonférentiels.

L'armature de sommet peut encore être constituée par exemple de deux couches d'éléments de renforcement faisant des angles avec la direction circonférentielle, lesdits éléments de renforcement étant croisés d'une couche à la suivante en faisant entre eux des angles par exemple de 50° dans la zone du plan équatorial, les éléments de renforcement de chacune des couches formant un angle par exemple égal à 25° avec la direction circonférentielle. Ces couches d'éléments de renforcement faisant des angles avec la direction circonférentielle peuvent venir en lieu et place de la couche d'éléments de renforcement circonférentiels notamment dans le cas d'un pneumatique avant ou bien en combinaison avec celle-ci.

La bande de roulement 2 du pneumatique 1 comporte une sculpture constituée de rainures continues 3 orientées circonférentiellement et de rainures transversales 4, la direction principale de celles-ci présentant un léger angle avec la direction radiale pour donner une orientation à ladite sculpture. Cette orientation de la sculpture est, dans le cas d'un pneumatique arrière, habituellement confondue avec le sens de rotation du pneumatique.

Les rainures 3 séparent la partie centrale de la bande de roulement des parties axialement extérieures comportant les rainures 4 et ne comportant pas d'incisions.

Conformément à l'invention, les parties centrales et axialement extérieures sont constituées de mélanges polymériques différents.

Le mélange polymérique constitutif de la partie centrale présente une dureté shore A égale à 66.

Le mélange polymérique constitutif des parties axialement extérieures présente une dureté shore A égale à 60.

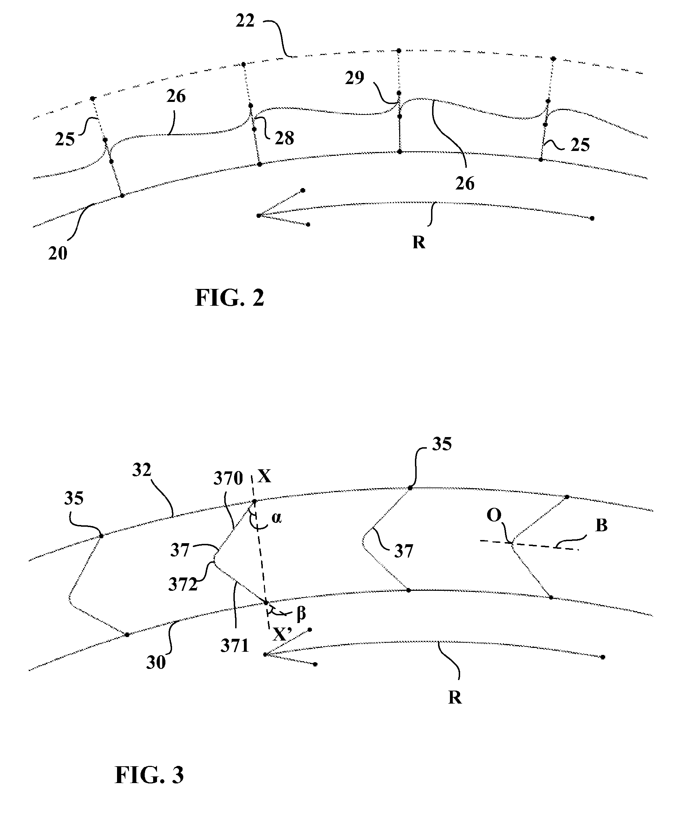

La bande de roulement 2 comporte dans sa partie centrale des incisions ou fentes 5, dont les largeurs non nulles sont très inférieures à celles des rainures 3 et 4 précédemment citées. Ces incisions forment selon l'invention dans le plan de coupe équatorial 6 un V ou chevron 7 couché dont l'une des extrémités affleure la surface de la bande de roulement 2. La forme en V sera décrite plus précisément en référence à la figure 3.

Tout en restant conforme à l'invention, la forme des incisions dans le plan de coupe équatorial peut être plus complexe dès lors qu'elle est constituée de deux lignes formant un angle avec la direction radiale compris ente 5 et 65° et les directions des lignes formant entre elles un angle compris entre 30 et 120° ; il peut s'agir par exemples de forme du type W ou bien de deux V accolés.

La figure 2 représente une vue partielle en coupe dans le plan équatorial d'un schéma du profil d'usure d'un pneumatique comportant des incisions dont l'orientation des parois dans un plan circonférentiel de coupe est radiale.

La ligne pointillée 22 représente la surface de la bande de roulement à l'état neuf du pneumatique. La ligne 20 est une ligne qui relie les fonds des incisions ; cela peut correspondre à la base de la bande de roulement.

Les lignes 25 représentent les incisions dont l'orientation dans le plan de coupe circonférentiel est radiale. Les parties en pointillés de ces lignes 25 représentent la partie disparue après usure de la bande de roulement lors du roulage du pneumatique.

Les lignes 26 représentent le profil dans un plan circonférentiel entre deux incisions 25 de la surface de la bande de roulement après usure lors du roulage du pneumatique. Entre deux incisions la bande de roulement est constituée d'un bloc de mélange caoutchouteux dont la surface 26 n'est plus un profil circulaire concentrique au profil 22 à l'état neuf. Considérant le sens de roulage indiqué par la flèche R, la ligne 26 d'un bloc de mélange caoutchouteux délimité par deux incisions montre un effondrement de la surface sur le bord d'attaque 28 dudit bloc et un relevé de ladite surface sur le bord de fuite 29 dudit bloc. Le bord d'attaque 28 est le bord d'un bloc entrant en contact le premier avec le sol lors du roulage et le bord de fuite 29 est le bord du même bloc quittant le contact avec le sol en dernier lors du roulage. Ces formes successives de la surface desdits blocs créent une surface de la bande de roulement totalement irrégulière qui est défavorable à l'usure et a tendance à augmenter la vitesse d'usure de la bande de roulement du pneumatique. De telles usures irrégulières sont encore néfastes au confort en particulier pour le bruit qu'elles peuvent engendrer.

La figure 3 illustre une vue partielle en coupe dans le plan équatorial d'un schéma du pneumatique de la figure 1. La ligne 32 représente la surface de la bande de roulement du pneumatique. La ligne 30 est une ligne qui relie les fonds des incisions 35 ; elle peut correspondre à la base de la bande de roulement. Ces incisions 35 présentent conformément à l'invention une forme 37 en V. Elles sont constituées de deux lignes 370, 371 reliées entre elles par un arc de cercle 372.

La flèche R indique le sens de roulage du pneumatique.

La ligne 370 qui affleure la surface de la bande de roulement 32 forme un angle α avec la direction radiale, matérialisée par l'axe XX'. L'angle α est orienté dans le sens de roulage R du pneumatique.

La ligne 371 forme un angle β avec la direction radiale orienté dans le sens opposé au sens de roulage R du pneumatique.

Comme expliqué précédemment, un angle d'inclinaison d'une incision par rapport à la direction radiale dans le sens de roulage R du pneumatique est plus favorable pour la vitesse d'usure d'autant que l'épaisseur de la sculpture est importante. La ligne 370 est donc avantageusement inclinée dans le sens de roulage R pour contribuer à la diminution la vitesse d'usure.

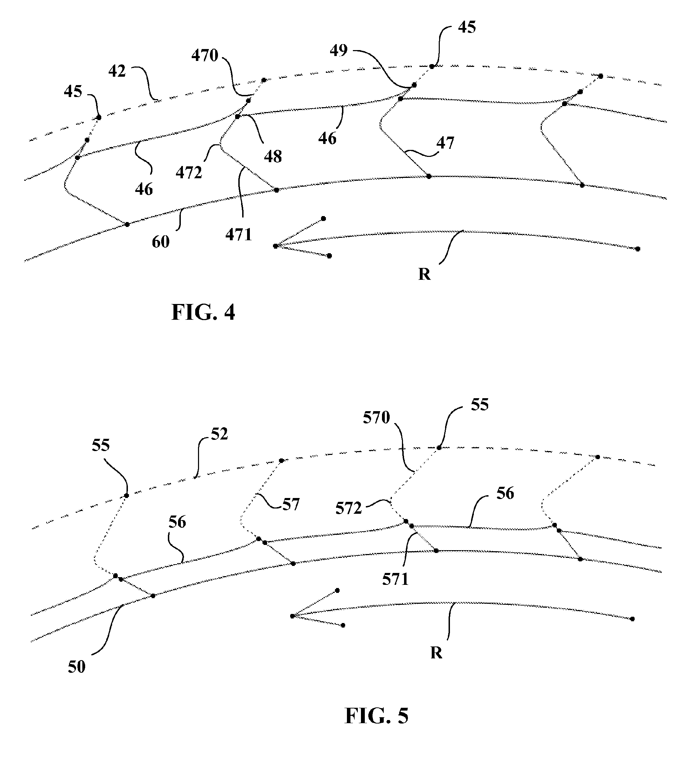

Sur la figure 3, on voit encore que les lignes 370 et 371 sont symétriques par rapport à la droite B qui représente la bissectrice de l'angle formé par l'intersection O des lignes 370 et 371. Les angles α et β sont donc identiques en valeur absolue. Une telle configuration des incisions 35 permet d'obtenir un compromis entre la vitesse d'usure et la régularité du profil d'usure. En effet, comme vont le montrer les figures 4 et 5, le profil d'usure de la bande de roulement est moins pénalisé que dans le cas d'incisions radiales dans un plan circonférentiel et l'orientation dans le sens de roulage R du pneumatique de la première ligne 370 permet de diminuer la vitesse d'usure de la bande de roulement.

La figure 4 représente une vue partielle en coupe dans le plan équatorial d'un schéma du profil d'usure du pneumatique de la figure 3 après une légère usure.

Les parties en pointillés des incisions 45 représentent les parties disparues du pneumatique après usure.

Les lignes 46 représentent le profil dans un plan circonférentiel entre deux incisions 45 de la surface de la bande de roulement après usure lors du roulage du pneumatique. Entre deux incisions la bande de roulement est constituée d'un bloc de mélange caoutchouteux dont la surface 46 n'est plus un profil circulaire concentrique au profil 42 à l'état neuf. Considérant le sens de roulage indiqué par la flèche R, la ligne 46 d'un bloc de mélange caoutchouteux délimité par deux incisions montre qu'au niveau du bord d'attaque 48 dudit bloc, la surface reste régulière alors qu'au niveau du bord de fuite 49 la surface est relevée. Ces formes successives de la surface desdits blocs créent une surface de la bande de roulement irrégulière dont les irrégularités sont toutefois moins prononcées que dans le cas de la figure 2 et qui ont moins d'effets sur la vitesse d'usure.

La figure 5 représente une vue partielle en coupe dans le plan équatorial d'un schéma du profil d'usure du pneumatique de la figure 3 après une usure plus importante que dans le cas de la figure 4. L'usure de la bande de roulement a notamment entamé l'usure des lignes 571 constituant une partie des incisions 55, les lignes 570 ayant totalement disparues.

Les parties en pointillées des incisions 55 représentent les parties disparues du pneumatique après usure.

Les lignes 56 représentent le profil dans un plan circonférentiel entre deux incisions 55 de la surface de la bande de roulement après usure lors du roulage du pneumatique. Entre deux incisions la bande de roulement est constituée d'un bloc de mélange caoutchouteux dont la surface 56 n'est plus un profil circulaire concentrique au profil 52 à l'état neuf comme dans le cas de la figure précédente.

Par contre, cette figure 5 montre que l'usure progressive correspondant à la disparition des lignes 571 vient diminuer les irrégularités apparues lors de l'usure correspondant à la disparition des lignes 570. En effet, il est apparu que l'orientation en sens opposé au sens de roulages R des lignes 571 à partir d'un profil d'usure qui est obtenu à l'issue de la disparition des lignes 570 conduit à un profil d'usure du pneumatique plus régulier.

L'invention ne doit pas être comprise comme étant limitée à la description des exemples ci-dessus. Elle prévoit notamment de combiner les réalisations de l'invention illustrés sur les figures avec des architectures pouvant varier selon la direction axiale, avec des couches d'éléments de renforcement orientés circonférentiellement dont le pas varie selon la direction axiale et des angles des éléments de renforcement des couches de travail variables selon la direction axiale.

Par ailleurs, l'invention prévoit encore la combinaison d'incisions telles que décrites précédemment avec d'autres types incisions telles que des incisions ne présentant pas d'inclinaison et donc orientées radialement dans un plan circonférentiel de coupe ou bien encore avec des incisions présentant une inclinaison telle que dans un plan circonférentiel de coupe l'incision forme un angle avec la direction radiale.

Des essais ont été réalisés avec un pneumatique de dimension 180/55 ZR 17 réalisé conformément aux cas des figures 1 et 3.

Ce pneumatique a été comparé à deux pneumatiques de référence identiques au pneumatique de l'invention, si ce n'est l'absence totale d'incisions sur la bande de roulement du pneumatique R1 et la présence d'incisions ne présentant pas d'inclinaison et donc orientées radialement sur le pneumatique R2. Le nombre d'incisions est identique sur le pneumatique conforme à l'invention et sur le pneumatique de référence R2.

Les essais ont consisté à effectuer des roulages sur circuit avec trois motocyclettes roulant en convoi en permutant les pneumatiques entre les motos, les pilotes restant les mêmes pour que chaque pneumatique ait parcouru le même kilométrage sur chaque motocyclette. Les résultats correspondent à un pourcentage d'usure de la bande de roulement au niveau du plan équatorial après un roulage de 5000 kilomètres.

Les résultats du pneumatique R2 ont été pris comme référence et sont donnés comme valeur 100.

Le pneumatique de référence R1 qui ne comporte pas d'incisions a obtenu la valeur 85.

Ces premiers résultats montrent que la présence d'incisions orientés radialement dans un plan circonférentiel de coupe conduit effectivement à augmenter la vitesse d'usure.

Le pneumatique selon l'invention a obtenu la valeur 87.

Ces résultats montrent que les incisions proposées selon l'invention permettent de réaliser des pneumatiques dont les propriétés en termes d'usure sont quasiment au niveau de celles d'un pneumatique sans incision.

D'autres essais ont été réalisés avec les mêmes pneumatiques pour comparer l'adhérence sur sol mouillé. Les résultats sont une appréciation subjective moyennée à partir des observations de trois pilotes.

La valeur 100 est attribuée au pneumatique de référence R1.

Le pneumatique selon l'invention et le pneumatique de référence R2 se voient attribuer la même note 120.

Ces résultats montrent bien que la présence des incisions sur les pneumatiques améliore sensiblement les performances en termes d'adhérence sur sol mouillé.

## Revendications

1. Pneumatique (1) pour véhicule motorisé à deux roues comportant une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement (2), au moins la surface de la bande de roulement (2) étant constituée d'un premier mélange polymérique s'étendant sur au moins une partie de la partie centrale et d'au moins un deuxième mélange polymérique présentant des propriétés physico-chimique différentes de celles dudit premier mélange polymérique et couvrant au moins une partie des parties axialement extérieures de la bande de roulement, **caractérisé en ce qu'au** moins la partie centrale de la bande de roulement comporte au moins une incision (5), **en ce que,** dans la partie centrale de la bande de roulement constituée dudit premier mélange polymérique, dans un plan circonférentiel, au moins une partie d'une paroi de ladite au moins une incision est formée de deux lignes (370, 371), **en ce que** chacune des lignes forme un angle (α, β) avec la direction radiale compris entre 5 et 65°, **en ce que** les directions desdites deux lignes successives forment entre elles un angle compris entre 30 et 120° et **en ce que** l'intersection des directions desdites deux lignes est orientée dans le sens de roulage du pneumatique par rapport aux extrémités des deux lignes.

2. Pneumatique (1) selon la revendication 1, **caractérisé en ce que** lesdites au moins deux lignes (370, 371) sont reliées par un arc de cercle (372).

3. Pneumatique (1) selon l'une des revendications 1 ou 2, une paroi de ladite au moins une incision étant formée de deux lignes (370, 371), **caractérisé en ce que** lesdites deux lignes sont symétriques l'une de l'autre par rapport à la bissectrice (B) de l'angle formée par leurs directions.

4. Pneumatique (1) selon l'une des revendications 1 à 2, une paroi de ladite au moins une incision étant formée de deux lignes (370, 371), **caractérisé en ce que** dans un plan circonférentiel, l'intersection des directions desdites deux lignes est située à une distance radiale de la surface de la bande de roulement comprise entre 25 et 50% de la profondeur de l'incision.

5. Pneumatique (1) selon l'une des revendications 1 à 2, une paroi de ladite au moins une incision étant formée de deux lignes (370, 371), **caractérisé en ce que** dans un plan circonférentiel, l'intersection des directions desdites deux lignes est située à une distance radiale de la surface de la bande de roulement comprise entre 50 et 75% de la hauteur de l'incision.

6. Pneumatique (1) selon l'une des revendications précédentes, **caractérisé en ce que** les éléments de renforcement de la structure de renfort de type carcasse font avec la direction circonférentielle un angle compris entre 65° et 90°.

7. Pneumatique (1) selon l'une des revendications précédentes, **caractérisé en ce que** la structure de renforcement de sommet comporte au moins une couche d'éléments de renforcement circonférentiels.

8. Pneumatique selon la revendication 7, **caractérisé en ce que** les éléments de renforcement circonférentiels sont répartis selon la direction transversale avec un pas variable.

9. Pneumatique (1) selon l'une des revendications précédentes, **caractérisé en ce que** la structure de renforcement de sommet comporte au moins une couche d'éléments de renforcement, dite couche de travail, et **en ce que** les éléments de renforcement forment des angles avec la direction circonférentielle compris entre 10 et 80°.

10. Pneumatique selon la revendication 9, **caractérisé en ce que** les angles formés par les éléments de renforcement de ladite au moins une couche de travail avec la direction longitudinale sont variables selon la direction transversale

11. Utilisation d'un pneumatique (1) tel que décrit selon l'une des revendications 1 à 10 pour équiper la roue arrière d'un véhicule motorisé à deux roues tel qu'une motocyclette.

## Patentansprüche

1. Luftreifen (1) für Kraftfahrzeug mit zwei Rädern, der eine karkassenartige Verstärkungsstruktur aufweist, die aus Verstärkungselementen gebildet ist und beiderseits des Luftreifens an einem Wulst verankert ist, dessen Basis dazu bestimmt ist, auf einem Felgensitz montiert zu werden, wobei jeder Wulst radial nach außen durch eine Seitenfläche verlängert ist, wobei die Seitenflächen radial auswärts durch eine Lauffläche (2) verbunden sind, wobei wenigstens die Oberfläche der Lauffläche (2) aus einem ersten Polymergemisch, das sich wenigstens über einen Teil des Mittelteils erstreckt, und aus wenigstens einem zweiten Polymergemisch, das physikalisch-chemische Eigenschaften aufweist, die von jenen des ersten Polymergemisches verschieden sind, und das wenigstens einen Teil der axial äußeren Teile der Lauffläche abdeckt, gebildet ist, **dadurch gekennzeichnet, dass** wenigstens der Mittelteil der Lauffläche wenigstens einen Einschnitt (5) aufweist, dass in dem Mittelteil der Lauffläche, der aus dem ersten Polymergemisch gebildet ist, in einer Umfangsebene wenigstens ein Teil einer Wand des wenigstens einen Einschnitts aus zwei Linien (370, 371) gebildet ist, dass jede der Linien einen Winkel (α,β) mit der radialen Richtung bildet, der im Bereich von 5 bis 65° liegt, dass die Richtungen der zwei aufeinander folgenden Linien untereinander einen Winkel von 30 bis 120° bilden und dass der Schnittpunkt der Richtungen der zwei Linien in Bezug auf die Enden der zwei Linien in Rollrichtung des Luftreifens orientiert ist.

2. Luftreifen (1) nach Anspruch 1, **dadurch gekennzeichnet, dass** die wenigstens zwei Linien (370, 371) durch einen Kreisbogen (372) verbunden sind.

3. Luftreifen (1) nach einem der Ansprüche 1 oder 2, wobei eine Wand des wenigstens einen Einschnitts aus zwei Linien (370, 371) gebildet ist, **dadurch gekennzeichnet, dass** die zwei Linien in Bezug auf die Winkelhalbierende (B) des Winkels, der durch ihre Richtungen gebildet wird, zueinander symmetrisch sind.

4. Luftreifen (1) nach einem der Ansprüche 1 bis 2, wobei eine Wand des wenigstens einen Einschnitts aus zwei Linien (370, 371) gebildet ist, **dadurch gekennzeichnet, dass** sich in einer Umfangsebene der Schnittpunkt der Richtungen der zwei Linien in einem radialen Abstand von der Oberfläche der Lauffläche befindet, der im Bereich von 25 bis 50 % der Tiefe des Einschnitts liegt.

5. Luftreifen (1) nach einem der Ansprüche 1 bis 2, wobei eine Wand des wenigstens einen Einschnitts aus zwei Linien (370, 371) gebildet ist, **dadurch gekennzeichnet, dass** sich in einer Umfangsebene der Schnittpunkt der Richtungen der zwei Linien in einem radialen Abstand von der Oberfläche der Lauffläche befindet, der im Bereich von 50 bis 75 % der Höhe des Einschnitts liegt.

6. Luftreifen (1) nach einem der vorhergehenden Ansprüche, **dadurch gekennzeichnet, dass** die Verstärkungselemente der karkassenartigen Verstärkungsstruktur mit der Umfangsrichtung einen Winkel im Bereich von 65° bis 90° bilden.

7. Luftreifen (1) nach einem der vorhergehenden Ansprüche, **dadurch gekennzeichnet, dass** die Verstärkungsstruktur der Oberseite wenigstens eine Schicht aus Umfangsverstärkungselementen umfasst.

8. Luftreifen nach Anspruch 7, **dadurch gekennzeichnet, dass** die Umfangsverstärkungselemente in transversaler Richtung mit einer variablen Schrittweite verteilt sind.

9. Luftreifen (1) nach einem der vorhergehenden Ansprüche, **dadurch gekennzeichnet, dass** die Oberseiten-Verstärkungsstruktur wenigstens eine Schicht aus Verstärkungselementen, die Arbeitsschicht genannt wird, umfasst und dass die Verstärkungselemente mit der Umfangsrichtung einen Winkel im Bereich von 10 bis 80° bilden.

10. Luftreifen nach Anspruch 9, **dadurch gekennzeichnet, dass** die durch die Verstärkungselemente der wenigstens einen Arbeitsschicht mit der Längsrichtung gebildeten Winkel in der transversalen Richtung variabel sind.

11. Verwendung eines Luftreifens (1) nach einem der Ansprüche 1 bis 10, um das Hinterrad eines Kraftfahrzeugs mit zwei Rädern, etwa eines Motorrades, auszurüsten.

## Claims

1. Tyre (1) for a motorized two-wheeled vehicle comprising a reinforcing structure of the carcass type, made up of reinforcing elements, anchored on each side of the tyre to a bead the base of which is intended to be mounted on a rim seat, each bead being extended radially outwards by a sidewall, the sidewalls radially towards the outside joining to a tread (2), at least the surface of the tread (2) consisting of a first polymer compound extending over at least part of the central part and of at least one second polymer compound having physico-chemical properties different from those of the said first polymer compound and covering at least part of the axially external parts of the tread, **characterized in that** at least the central part of the tread comprises at least one incision (5), **in that**, in the central part of the tread consisting of the said first polymer compound, in a circumferential plane, at least part of one wall of the said at least one incision is formed of at least two lines (370, 371), **in that** each of the lines makes with the radial direction an angle (α, β) of between 5 and 65°, **in that** the directions of the said two successive lines make an angle of between 30 and 120° between them, and **in that** the intersection of the directions of the said two lines is oriented in the running direction of the tyre with respect to the ends of the two lines.

2. Tyre (1) according to Claim 1, **characterized in that** the said at least two lines (370, 371) are connected by an arc of **a** circle (372).

3. Tyre (1) according to one of Claims 1 and 2, one wall of the said at least one incision being formed of two lines (370, 371), **characterized in that** said two lines are symmetric with respect to one another about the bisector (B) of the angle formed by their directions.

4. Tyre (1) according to one of Claims 1 to 2, one wall of the said at least one incision being formed of two lines (370, 371, **characterized in that** in a circumferential plane, the intersection of the directions of the said two lines is situated at a radial distance of between 25 and 50% of the depth of the incision away from the surface of the tread.

5. Tyre (1) according to one of Claims 1 to 2, one wall of the said at least one incision being formed of two lines (370, 371, **characterized in that** in a circumferential plane, the intersection of the directions of the said two lines is situated at a radial distance of between 50 and 75% of the height of the incision away from the surface of the tread.

6. Tyre (1) according to one of the preceding claims, **characterized in that** the reinforcing elements of the carcass-type reinforcing structure make with the circumferential direction an angle of between 65 and 90°.

7. Tyre (1) according to one of the preceding claims, **characterized in that** the crown reinforcing structure comprises at least one layer of circumferential reinforcing elements.

8. Tyre (1) according to Claim 7, **characterized in that** the circumferential reinforcing elements are distributed in the transverse direction at a variable pitch.

9. Tyre (1) according to one of the preceding claims, **characterized in that** the crown reinforcing structure comprises at least one layer of reinforcing elements, known as the working layer, and **in that** the reinforcing elements make with the circumferential direction angles of between 10 and 80°.

10. Tyre (1) according to Claim 9, **characterized in that** the angles made by the reinforcing elements of the said at least one working layer with the longitudinal direction can vary in the transverse direction

11. Use of a tyre (1) as described in one of Claims 1 to 10 to be fitted to the rear wheel of a motorized two-wheeled vehicle such as a motorbike.
